# DEMANDE DE BREVET EUROPEEN

(11) **EP 1 519 159 A1**
(43) Date de publication de la demande: **30.03.2005**
(21) Numéro de dépôt: 03021844.0
(22) Date de dépôt: 26.09.2003
(51) Int. Cl.: G01D 11/24, G01D 11/28

(54) **Structure de micromoteur pour indicateur à aiguille**

(71) Demandeur: Microcomponents SA, 2540 Grenchen (CH)
(72) Inventeur: Hirt, Andreas, 2552 Orpund (CH); Vuillomenet, Marc, 2400 Le Locle (CH); Pages, Albert, 2052 Fontainemelon (CH)
(74) Mandataire: Laurent, Jean

(57) **Abrégé**

La présente invention concerne un micromoteur (1) pour dispositif indicateur à aiguille (4) du type utilisé généralement dans les tableaux de bord de véhicules automobiles. Plus précisément, la présente invention concerne un tel type de micromoteur (1) comportant un boîtier dont une région présente une épaisseur E2 plus faible que son épaisseur maximale E1, de façon à former un espace libre ou dégagement (34) ouvert sur l'extérieur, en particulier au niveau du fond (2) du boîtier. Ce dégagement (34) peut être mis à profit pour arranger des composants (18) nécessaires au fonctionnement du tableau de bord dans lequel le micromoteur est monté et, procurer ainsi un gain de place par rapport aux dispositifs de l'art antérieur.

## Description

La présente invention concerne un micromoteur pour dispositif indicateur à aiguille comportant un boîtier à l'intérieur duquel sont logés des moyens moteurs et des moyens prévus pour transmettre le mouvement des moyens moteurs à un arbre d'entraînement d'axe X1 susceptible d'entraîner une aiguille indicatrice. En outre, le boîtier comporte une première face, comprenant une ouverture pour rendre accessible l'arbre d'entraînement et une seconde face opposée à la première face, la distance séparant la première face de la seconde face définissant une épaisseur maximale E1 du boîtier.

La présente invention concerne également un dispositif indicateur pour tableau de bord comportant un micromoteur, du type défini plus haut, arrangé sur une plaquette à circuits imprimés, une aiguille indicatrice étant montée dans l'arbre d'entraînement du micromoteur.

Un exemple d'application courant pour ce type de dispositifs indicateurs à aiguille est l'indication des variations d'une grandeur mesurée sur le tableau de bord d'un véhicule automobile, tel que la vitesse de déplacement du véhicule, le régime moteur du véhicule, le niveau de carburant ou encore la température du moteur.

On notera que, dans le présent texte, le terme "moteur" est employé pour désigner l'ensemble comportant de manière conventionnelle, à titre d'exemple, un rotor logé dans un stator ainsi que des bobines d'excitation du rotor, tandis que le terme "micromoteur" désigne un tel "moteur" lorsqu'il est intégré dans un boîtier fermé et associé à des moyens d'entraînement d'une aiguille indicatrice.

### ARRIÈRE-PLAN TECHNOLOGIQUE

De tels dispositifs sont connus de l'art antérieur. Le brevet US 4,954,807 décrit un exemple de réalisation d'un tableau de bord pour véhicule automobile sur lequel les valeurs respectives de plusieurs grandeurs physiques mesurées sont indiquées. Une des préoccupations connues dans ce domaine est abordée dans ce brevet américain, à savoir l'encombrement des dispositifs utilisés, en particulier pour réaliser l'affichage simultané des valeurs respectives d'une pluralité de grandeurs physiques mesurées. En effet, l'encombrement de ces dispositifs présente un minimum non négligeable si on veut préserver une certaine lisibilité des informations affichées.

Ainsi, le brevet américain précité propose une structure de tableau de bord permettant de limiter l'encombrement de ses éléments constitutifs.

Toutefois, les progrès techniques effectués les dernières années dans le domaine des véhicules automobiles ont poussé les constructeurs à enrichir de plus en plus les informations affichées sur les tableaux de bord.

Par conséquent, le nombre d'éléments constitutifs des dispositifs d'affichage augmente également, en particulier lorsque l'affichage des grandeurs physiques mesurées est effectué de manière analogique. Dans ce cas, en effet, le recours à des moteurs électriques est nécessaire, un moteur devant généralement être prévu pour chaque grandeur physique qui doit être affichée. On trouve en outre de plus en plus de composants électroniques intégrés à ces tableaux de bord pour effectuer divers calculs ou encore remplir diverses fonctions d'affichage. Les moteurs électriques, ainsi que les composants électroniques, sont typiquement montés sur une plaquette à circuits imprimés, tandis que les moteurs électriques sont surmontés par un cadran portant des indications ou graduations relatives aux grandeurs physiques mesurées.

Dans le but d'atteindre un encombrement globalement raisonnable pour un tableau de bord de ce type, le constructeur est forcé de trouver un compromis entre le nombre d'informations affichées d'une part et, les dimensions de la plaquette à circuits imprimés (PCB) portant les éléments constitutifs du tableau de bord, ainsi que la distance du PCB au cadran surmontant les moteurs électriques d'autre part.

### RÉSUMÉ DE L'INVENTION

Un but de la présente invention est de pallier aux inconvénients de l'art antérieur susmentionnés en proposant une structure de micromoteur présentant un encombrement réduit par rapport aux micromoteurs connus dans l'art antérieur. Un micromoteur à encombrement réduit permet de réaliser un dispositif indicateur à aiguille d'encombrement réduit et donc, un tableau de bord comportant de tels dispositifs indicateurs à encombrement également réduit ou encore permettant d'afficher plus d'informations qu'avec un tableau de bord selon l'art antérieur présentant un encombrement équivalent.

Dans ce but, la présente invention concerne un micromoteur du type indiqué plus haut, caractérisé par le fait que le boîtier présente une région d'épaisseur E2 plus faible que l'épaisseur maximale E1 de façon à définir un dégagement ouvert dans la seconde face.

Grâce à une telle structure, l'espace libéré à l'extérieur du boîtier au niveau du dégagement peut être mis à profit pour y disposer des éléments constitutifs du tableau de bord tels que des composants électroniques, par exemple.

Ainsi, dans le cas particulier non limitatif selon lequel le boîtier est fixé à un PCB par la seconde face, typiquement par son fond, un espace libre est ménagé entre une partie du fond et le PCB. Une pluralité de composants électroniques peuvent être disposés dans cet espace libre, tandis qu'avec les structures de l'art antérieur ces composants ne pouvaient être disposés qu'à côté du boîtier sur le PCB, ce qui avait pour conséquence d'augmenter l'encombrement.

Dans un mode de réalisation particulier de la présente invention, il est prévu notamment d'utiliser un arbre d'entraînement de type creux, le fond du boîtier comportant une ouverture ménagée en regard du creux de l'arbre. L'arbre d'entraînement creux est alors associé à une aiguille indicatrice dont la tige est transparente pour permettre la propagation de radiations lumineuses destinées à en éclairer l'index. Ainsi, grâce à la structure particulière selon la présente invention, il est possible de disposer une source lumineuse directement sur le PCB en regard de l'ouverture ménagée dans le fond du boîtier pour assurer l'illumination de l'aiguille indicatrice. De cette manière, la source lumineuse peut être montée sur le PCB pendant l'étape de fabrication au cours de laquelle les divers composants électroniques sont montés sur le PCB. On pourra par exemple utiliser dans ce cas une source lumineuse du type diode électroluminescente (LED) compatible avec les procédés de montage des composants du type "SMD" (Surface Mounting Device), couramment employés dans les tableaux de bord.

Par ailleurs, dans le cas d'une fixation du micromoteur sur le PCB par sa première face, typiquement son couvercle, on peut prévoir qu'un support pour source lumineuse est fixé au boîtier au niveau de la partie du fond située au niveau du dégagement. Bien entendu, le support est alors arrangé de telle manière que lorsqu'une source lumineuse y est disposée, la lumière émise se propage en direction du creux de l'arbre d'entraînement, c'est-à-dire vers la tige de l'aiguille indicatrice.

Dans le cas où le boîtier est réalisé par moulage de matière plastique, on peut prévoir de mouler le support de source lumineuse d'une pièce avec le boîtier ou, alternativement, de ménager des moyens de fixation pour arranger un support rapporté, éventuellement amovible.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 représente une vue en perspective d'une partie d'un dispositif indicateur selon un premier mode de réalisation de la présente invention;
- la figure 2 représente une vue en coupe simplifiée du dispositif indicateur représenté sur la figure 1, et
- la figure 3 représente une vue en coupe similaire à celle de la figure 2 d'une partie du dispositif indicateur selon un second mode de réalisation de la présente invention.

### DESCRIPTION DÉTAILLÉE

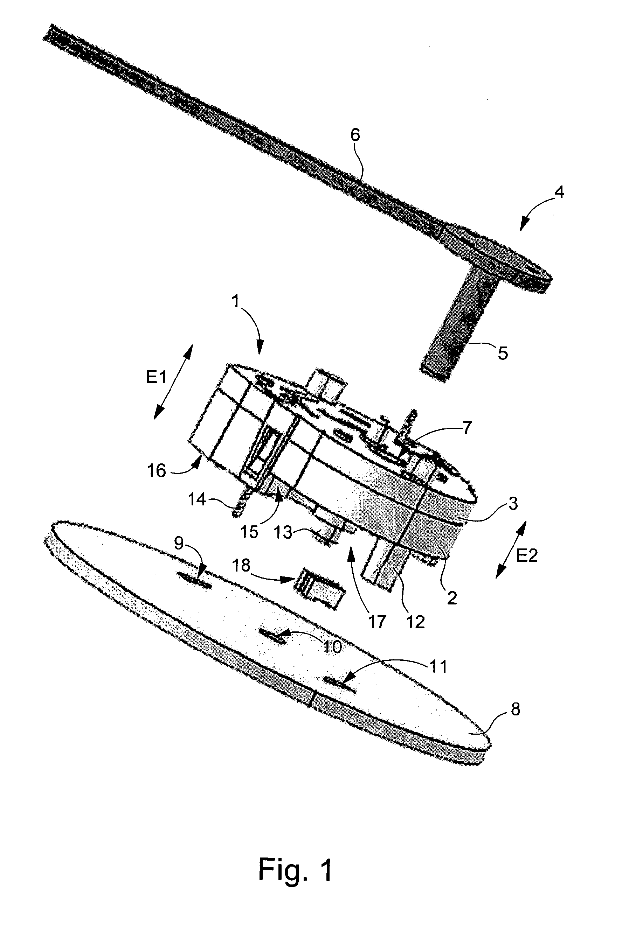

La figure 1 représente une vue en perspective éclatée d'une partie d'un dispositif indicateur à aiguille pour tableau de bord, selon un premier mode de réalisation de la présente invention.

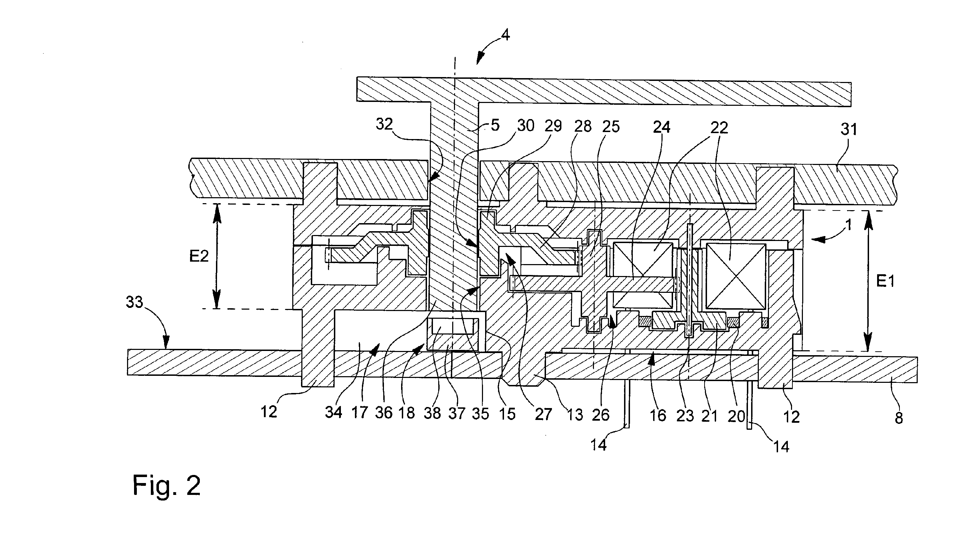

Le dispositif représenté sur la figure 1 comporte un micromoteur 1 comprenant un boîtier, composé notamment d'un fond 2 fermé par un couvercle 3 et, à l'intérieur duquel sont logés divers éléments (représentés sur la figure 2) permettant d'entraîner une aiguille indicatrice 4. L'aiguille 4 comporte une tige 5, représentée ici de forme cylindrique à titre non limitatif, solidaire d'un index 6 dont la fonction est d'indiquer la valeur d'une grandeur physique mesurée en regard d'indications ou graduations portées par un cadran (visible sur la figure 2).

Le couvercle 3 du boîtier comprend notamment une ouverture 7 à travers laquelle il est prévu d'insérer la tige 6 de l'aiguille pour rendre cette dernière solidaire d'un mobile d'entraînement du micromoteur (également visible sur la figure 2). On peut noter que l'insertion de la tige d'aiguille dans l'arbre d'entraînement est effectuée après la mise en place du cadran sur le micromoteur lors du procédé de montage du tableau de bord.

Il est prévu de monter le micromoteur 1 sur une plaquette à circuits imprimés (PCB) 8, schématisée ici sous la forme d'un disque à titre illustratif non limitatif. Dans ce but, le PCB est muni de trois ouvertures 9, 10 et 11 à l'intérieur desquelles il est prévu d'insérer des pieds 12 et 13, ici au nombre de trois, à titre d'exemple, deux seulement étant visibles sur la vue de la figure 1.

On distingue en outre, sur la figure 1, un contact 14 permettant d'alimenter des organes d'un moteur, disposé à l'intérieur du boîtier, en énergie électrique. Le contact est arrangé pour être chassé, puis éventuellement soudé, dans un trou du PCB non représenté, ce trou étant relié à des pistes de circuits imprimés du PCB (non représentées), de manière conventionnelle.

D'autre part, on constate sur la figure 1 que le fond 2 du boîtier comporte un décrochement 15 définissant un dégagement dans le fond du boîtier ou encore deux régions du boîtier présentant des épaisseurs respectives différentes. Une première région 16 au niveau de laquelle sont situés les organes du moteur présente en effet une épaisseur E1 plus importante que l'épaisseur E2 d'une seconde région 17, au niveau de laquelle est situé notamment en partie le mobile d'entraînement.

Un composant additionnel 18 a également été schématisé sur la figure 1 et est destiné à être disposé sur le PCB en regard de la seconde région 17 du boîtier, c'est-à-dire dans le dégagement. De manière générale, ce composant 18 peut être un quelconque composant utilisé dans le tableau de bord et présentant une épaisseur inférieure à E1-E2. De manière alternative, on peut également envisager de disposer une pluralité de composants d'épaisseurs respectives inférieures à E1-E2 sur le PCB en regard de la seconde région 17 du boîtier, c'est-à-dire dans le dégagement.

Selon une variante préférée du présent mode de réalisation conformément à l'invention, au moins un des composants 18, dans le cas où il y en a plusieurs, est une source lumineuse, préférablement une diode électroluminescente. Cette diode est alors enfichée dans le PCB, soit directement, soit par le biais d'un support spécifique, tel que représenté sur les figures. En outre, on peut noter qu'il est possible de recourir à l'utilisation de diodes à 1, 2 ou 3 couleurs, de type conventionnel, sans sortir du cadre de la présente invention.

La structure particulière du micromoteur selon la présente invention ainsi que la disposition de la diode 18 apparaissent plus clairement de la vue en coupe représentée sur la figure 2.

Le micromoteur 1 comporte un moteur de type conventionnel comprenant un stator 20 dans lequel est ménagé une ouverture adaptée pour loger un rotor 21. Des moyens d'alimentation en énergie du moteur sont également disposés sur le stator 20 et sont schématisés sur la figure 2 sous la forme de deux bobines 22, alimentées en courant via leurs plots de connexions 14 respectifs.

Le rotor 21 est solidaire d'un arbre 23 monté à pivot d'une part dans le fond 2 du boîtier et d'autre part dans le couvercle 3. L'arbre 23 porte en outre une denture avec laquelle engrène la denture d'une roue intermédiaire 24, cette dernière formant, en association avec un arbre 25, un mobile intermédiaire 26. De même que l'arbre 23, l'arbre 25 est monté à pivot, d'une part dans le fond 2 et, d'autre part, dans le couvercle 2 du boîtier.

Un mobile d'entraînement 27 est disposé dans le boîtier du micromoteur et comprend une roue d'entraînement 28 dentée montée sur un arbre creux 29, la roue 28 engrenant avec l'arbre 25 du mobile intermédiaire 26.

On peut noter que le micromoteur représenté ici comporte un boîtier préférablement réalisé par un moulage de matière plastique. Ainsi, des reliefs sont prévus pour supporter le mobile d'entraînement 27, de façon à le positionner correctement tout en lui permettant de tourner sur lui-même avec un minimum de frottements.

L'arbre creux 29 comporte des surfaces de contact 30 internes pour assurer la connexion mécanique avec la tige 5 de l'aiguille indicatrice 4. Les moyens de connexion mécanique employés pour le logement de l'aiguille indicatrice 4 à l'intérieur de l'arbre creux 29 peuvent être de type conventionnel et ne seront pas abordés davantage. De manière alternative, l'homme du métier pourra consulter l'enseignement de la demande de brevet européen No 03019720.6, déposée le 3 septembre 2003 au nom de la Demanderesse, pour adapter les moyens de connexion selon l'un quelconque des modes de réalisation qui y sont décrits à la mise en oeuvre de la présente invention.

La figure 2 représente un exemple de micromoteur selon la présente invention alors qu'un cadran 31 a été mis en place contre le couvercle 3 de son boîtier. Le cadran 31 comporte une ouverture 32 pour laisser un passage pour la tige 5 de l'aiguille indicatrice 4.

Par ailleurs, le micromoteur est également représenté alors qu'il est fixé sur le PCB 8 par son fond 2, plus précisément par les pieds 12 et 13 qui coopèrent avec les ouvertures 9, 10 et 11 adaptées du PCB.

La figure 2 laisse apparaître plus clairement la forme du décrochement 15 du fond 2 du boîtier. Le décrochement a été représenté, à titre d'exemple non limitatif, sensiblement perpendiculaire à la surface 33 du PCB contre laquelle le micromoteur est disposé.

Le décrochement 15 forme un dégagement 34 dans le fond du boîtier qui correspond à deux régions volumiques à l'intérieur du boîtier du micromoteur. Une première région volumique 16, représentée sur la droite de la figure 2, correspond à une épaisseur E1 du boîtier plus importante que l'épaisseur E2 du boîtier au niveau de la seconde région 17, représentée sur la gauche de la figure 2.

En effet, on peut noter que les éléments d'un moteur électrique qui occupent typiquement le plus d'espace sont les bobines. Ainsi, la Demanderesse a constaté qu'en ayant recours à une structure compacte de moteur, il est possible de limiter l'encombrement d'un micromoteur, en particulier son épaisseur, dans la partie qui comporte les éléments autres que les bobines.

Par conséquent, dans le micromoteur selon la présente invention, les organes constitutifs du moteur, c'est-à-dire le stator 20, le rotor 21 et les bobines 22 sont disposés dans une première région volumique 16 du boîtier présentant une épaisseur E1. De cette manière, le boîtier peut présenter une épaisseur réduite E2 au niveau de la région volumique 17 qui sert à loger des éléments constitutifs du micromoteur moins encombrants que les bobines 22, notamment ici le mobile d'entraînement 27.

Cette répartition du volume occupé par les éléments constitutifs du micromoteur ainsi que l'aménagement du décrochement 15 permettent avantageusement de libérer le dégagement 34 entre une partie du micromoteur, à savoir la partie située au niveau de la seconde région volumique 17, et le PCB 8.

La tendance selon laquelle de plus en plus d'informations sont rendus accessibles à l'utilisateur d'un véhicule, au niveau du tableau de bord, entraîne une augmentation des composants électroniques nécessaires à la gestion de l'affichage sur le tableau de bord.

L'existence de l'espace libre ou dégagement 34 permet d'y disposer des composants électroniques qui devaient nécessairement être disposés à l'extérieur de la projection du boîtier du micromoteur avec les structures connues de l'art antérieur. Le dégagement 34 permet ainsi d'optimiser l'occupation de la surface 33 du PCB 8. On peut noter que les dimensions substantielles du dégagement 34 permettent d'y disposer une grande diversité de composants électroniques conventionnels.

Un seul composant a été représenté sur la figure 2, à titre d'exemple et selon une variante préférée de mise en oeuvre du dispositif indicateur selon la présente invention.

En effet, dans le mode de mise en oeuvre représenté, à titre illustratif et non limitatif, une source lumineuse est disposée sur le PCB 8, au niveau de la seconde région volumique 17. Plus précisément, le fond 2 du boîtier comporte une ouverture 35 dans laquelle est positionnée l'extrémité libre 36 de la tige 5 de l'aiguille indicatrice 4, lorsque cette dernière est montée dans le mobile d'entraînement 27. La source lumineuse, schématisée ici par un support 37 portant une diode électroluminescente, ou LED 38, est alors positionnée en regard de l'ouverture 35, de telle manière qu'un maximum de la lumière émise par la LED 38 soit dirigé directement à l'intérieur de la tige 5 de l'aiguille 4, dans le but d'en illuminer efficacement l'index 6. Bien entendu, dans ce cas, la tige 5 de l'aiguille indicatrice 4 doit être transparente. L'aiguille indicatrice 4 peut alors être fabriquée d'une pièce par un procédé de moulage conventionnel.

En plus de l'efficacité de l'illumination et du gain de place obtenus, la structure du micromoteur selon la présente invention présente un avantage supplémentaire résidant dans le fait que la source lumineuse assurant l'illumination de l'aiguille indicatrice 4 est disposée en milieu ouvert. Ainsi, la dissipation de la chaleur produite par la LED est améliorée et les risques d'élévation de température des éléments situés à proximité de la source lumineuse sont réduits.

On peut bien entendu prévoir de disposer des composants additionnels à proximité de la LED 38, au niveau de la seconde région volumique 17 dans la mesure où le dégagement 34 offre une place suffisante.

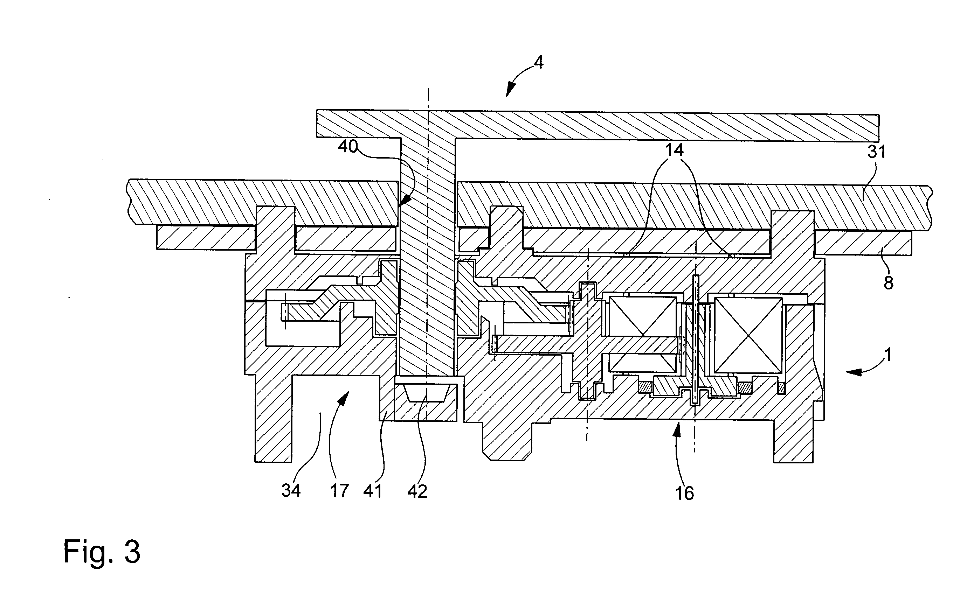

On a représenté un second mode de réalisation de la présente invention sur la figure 3, à titre d'exemple. On connaît en effet des dispositions de micromoteur selon lesquelles ce dernier est fixé au PCB par son couvercle et non par son fond comme cela a été représenté sur les figures 1 et 2. Les mêmes références numériques que celles employées en relation avec les figures précédentes ont été utilisées pour désigner les mêmes éléments.

La disposition à l'intérieur du boîtier du micromoteur 1 est identique à celle décrite précédemment. Cependant, selon ce mode de réalisation, le micromoteur 1 est fixé au PCB 8 par son couvercle 3. Le PCB 8 est alors monté sur le cadran 31 et est en outre muni d'une ouverture 40 pour laisser libre un passage pour l'aiguille indicatrice 4.

Dans la mesure où, selon le présent mode de réalisation, la source lumineuse ne peut plus être fixée à la fois au PCB 8 et en regard de la tige 5 de l'aiguille 4, il est nécessaire de prévoir une modification de son support par rapport à ce qui a été décrit plus haut.

On prévoit en effet une extension 41, ou support, sur le fond du boîtier, sensiblement perpendiculaire au fond par exemple, sur lequel une source lumineuse ou LED 42 est destinée à être fixée, dans le but de positionner cette dernière en regard de la tige 5. Dans ce cas, la LED utilisée est du type "side LED", c'est-à-dire que la direction d'émission de la lumière est sensiblement perpendiculaire à la surface par laquelle la LED est fixée à son support, et peut être capable d'émettre de la lumière d'une, de deux ou de trois couleurs différentes.

Grâce à une telle structure, la LED peut être montée sans induire d'augmentation de l'encombrement du micromoteur du point de vue de l'épaisseur. L'homme du métier n'aura aucune difficulté à utiliser tout moyen de connexion électrique de la LED au PCB de type conventionnel et adapté à la mise en oeuvre de la présente invention. On peut par exemple envisager de surmouler des connecteurs électriques (non représentés) à l'intérieur du boîtier du micromoteur pour assurer la connexion électrique de la LED avec le PCB, via l'extension 41 du boîtier.

Bien entendu, l'homme du métier pourra prévoir des solutions alternatives pour assurer la fixation de la LED sur le boîtier du micromoteur, comme par exemple une fixation directe sans support, sans sortir du cadre de la présente invention.

La description qui précède correspond à des modes de réalisation particuliers et ne saurait en aucun cas être considérée comme limitative, en ce qui concerne plus particulièrement la forme décrite et représentée pour les différents éléments structurels composant le moteur ainsi que leurs emplacements respectifs.

De même, l'homme du métier ne rencontrera pas de difficulté particulière pour adapter la forme du dégagement à ses propres besoins sans sortir du cadre de la présente invention. A titre d'exemple, on peut noter que le dégagement selon la présente invention n'est pas obligatoirement ouvert sur la paroi latérale du boîtier du micromoteur, contrairement à ce qui a été représenté sur les figures.

Les applications possibles pour un tel dispositif de commande sont très nombreuses puisque la présente invention peut être mise en oeuvre pour tout type d'appareil électronique nécessitant un moteur pour entraîner un élément mobile, tel qu'un organe indicateur analogique, et présentant des contraintes à respecter en matière d'encombrement.

## Revendications

1. Micromoteur (1) pour dispositif indicateur à aiguille comportant un boîtier à l'intérieur duquel sont logés des moyens moteurs (20, 21, 22) et des moyens (26) prévus pour transmettre le mouvement desdits moyens moteurs à un arbre d'entraînement (29) d'axe X1 susceptible d'entraîner une aiguille (4) indicatrice, ledit boîtier comportant une première face comprenant une ouverture (7) pour rendre accessible ledit arbre d'entraînement (29) et une seconde face opposée à ladite première face, la distance séparant ladite première face de ladite seconde face définissant une épaisseur maximale E1 dudit boîtier, **caractérisé en ce que** ledit boîtier présente une région d'épaisseur E2 plus faible que ladite épaisseur maximale E1 de façon à définir un dégagement (34) ouvert dans ladite seconde face.

2. Micromoteur selon la revendication 1, lesdites première et seconde faces étant reliées entre elles par au moins une face latérale, **caractérisé en ce que** ledit dégagement (34) est également ouvert sur ladite face latérale.

3. Micromoteur selon la revendication 1 ou 2, **caractérisé en ce que** ledit dégagement (34) est ménagé dans une région de ladite seconde face située au moins partiellement en regard dudit arbre d'entraînement (29).

4. Micromoteur selon la revendication 3, **caractérisé en ce que** ledit arbre d'entraînement (29) est creux, ladite seconde face du boîtier comportant une ouverture (35) ménagée sensiblement en regard dudit axe X1 de l'arbre creux.

5. Micromoteur selon la revendication 4, **caractérisé en ce qu'**il comporte en outre un support (41) ménagé dans la région de ladite ouverture (35) et destiné à recevoir une source lumineuse (42) , l'épaisseur totale du boîtier et dudit support (41) de source lumineuse étant inférieure ou égale à l'épaisseur maximale E1 du boîtier.

6. Micromoteur selon l'une quelconque des revendications précédentes, **caractérisé en ce que** ledit boîtier comporte un fond (2) définissant ladite seconde face et fermé par un couvercle (3), ledit couvercle définissant ladite première face, le fond (2) présentant au moins un décrochement (15) formant ledit dégagement (34).

7. Micromoteur selon l'une quelconque des revendications précédentes, **caractérisé en ce que** les régions dudit boîtier présentant une épaisseur sensiblement égale à ladite épaisseur maximale E1 correspondent à une première région volumique (16) de l'intérieur du boîtier dans laquelle sont notamment arrangés lesdits moyens moteurs (20, 21, 22), tandis que la région du boîtier située sensiblement en regard dudit dégagement (34) correspond à une seconde région volumique (17) de l'intérieur du boîtier dans laquelle est notamment arrangé ledit arbre d'entraînement (29).

8. Micromoteur selon l'une quelconque des revendications précédentes, **caractérisé en ce que** ladite seconde face du boîtier comprend au moins un pied (12, 13) destiné à assurer le positionnement et/ou la fixation du boîtier sur un support (8).

9. Dispositif indicateur pour tableau de bord comportant un micromoteur (1) selon l'une quelconque des revendications précédentes monté sur une plaquette à circuits imprimés (8).

10. Dispositif indicateur selon la revendication 9, lorsque ledit micromoteur est monté sur ladite plaquette à circuits imprimés (8) par sa seconde face, **caractérisé en ce qu'**au moins un composant (18) est disposé sur ladite plaquette à circuit imprimé en étant au moins partiellement arrangé dans ledit dégagement (34).

11. Dispositif indicateur selon la revendication 10, lorsque ledit arbre d'entraînement (29) est creux, **caractérisé en ce que** ledit composant (18) comprend une source lumineuse (38), le dispositif indicateur comportant en outre une aiguille indicatrice (4) comprenant une tige (5) transparente, cette dernière étant logée dans ledit arbre d'entraînement (29).
